# EUROPEAN PATENT SPECIFICATION

(11) **EP 2 480 956 B1**
(45) Date of publication and mention of the grant of the patent: **23.10.2013**
(21) Application number: 10760755.8
(22) Date of filing: 24.09.2010
(51) Int. Cl.: G06F 3/044

(54) **TOUCH SCREEN DISPLAYS**
BERÜHRUNGSBILDSCHIRME
ÉCRANS TACTILES

(30) Priority: 24.09.2009 GB 0916806
(43) Date of publication of application: 01.08.2012
(73) Proprietor: Plastic Logic Limited, Cambridge CB4 0FX (GB)
(72) Inventor: FARMER, Steven Paul, Cambridge Cambridgeshire CB4 0FX (GB); BARCLAY, Duncan, Cambridge Cambridgeshire CB4 0FX (GB); ADCOCK, Steve, Cambridge Cambridgeshire CB4 0FX (GB); WALSH, Sean, Cambridge Cambridgeshire CB4 0FX (GB)
(74) Representative: Gwilt, Julia Louise
(86) International application number: PCT/GB2010/051601
(87) International publication number: WO 2011/036492

(56) References cited:
- US-A1- 2007 279 395

## Description

### FIELD OF THE INVENTION

This invention relates to improved techniques for implementing touch screen displays, in particular projected capacitance touch screen sensing for large electrophoretic display screens, and to electronic document readers implementing these techniques.

### BACKGROUND TO THE INVENTION

Background prior art relating to electronic document reading devices can be found in US6,124,851, US2004/0201633, US2006/0133664, US2006/0125802, US2006/0139308, US2006/0077190, US2005/0260551, US6124851, US6021306, US2005/0151742, and US2006/0119615. Examples of electronic document reading devices are the Iliad Ilex (RTM), the Amazon Kindle (RTM) and the Sony (RTM) Reader. Background prior art relating to power saving can be found in: US2007/0028086, US2007/0115258, and US7058829.

We have previously described electronic document reading devices using an electrophoretic display with a flexible or flex-tolerant backplane based on plastic (solution-deposited) electronics, for example in our earlier applications PCT/GB2006/050235, PCT/GB2008/050980, PCT/GB2008/050977, and PCT/GB2008/050985.

As a skilled person will appreciate, there is a range of touch screen technologies. We have described an electronic document reading device with a touch sensitive display using resistive touch screen technology in WO2007/012899. However a particularly advantageous touch screen technology is capacitive-based sensing, in particular projected capacitance touch sensing. This typically employs an XY array of thin conducting electrodes mechanically located behind the front surface of the display screen, projecting an electric field beyond the display screen. Touching the screen results in capacitance between a user's finger and the sensing electrodes, changing the capacity of coupling between the wires at the touched X-Y position this change in mutual capacitance is detected to detect the touch position. The term projected capacitance arises because of the electrostatic field lines projected by the sensing electrodes. An alternative capacitive sensing technology, sometimes called surface or absolute capacitance sensing, relies on the user's finger approximating a ground connection, detecting the change in absolute capacitance (to ground) to identify a touched location. Background prior art relating to touch screens comprising a two-dimensional capacitive position sensor can be found in US2007/0279395.

Projected capacitance touch sensing is commonly used on mobile phones, personal media players and the like, using transparent ITO (Indium Tin Oxide) electrodes deposited on an interior surface in front of the displayed information. There is, however, a problem with achieving fine sensing resolution because of the large number of electrode connections needed to be routed back to a single touch sensing integrated circuit, and because fine (thin) ITO tracks are relatively resistive. It will be appreciated that these problems are exacerbated as display size increases.

One solution to these problems is to employ interpolation between sensor electrodes to increase the effective sensing resolution. Touch sensing integrated circuits for projected capacitance touch screens which employ such interpolation are available for example, from Cypress Semiconductor Corp., in particular in their PSOC (Programmable System -On-Chip (RTM)) devices which implement so-called "sliders" which perform linear interpolation for increased sensing accuracy. There is, however, a need for improved techniques, in particular for larger display screens.

### SUMMARY OF THE INVENTION

According to a first aspect of the invention there is therefore provided a projected capacitance touch screen sensing system, the system comprising: an electronic display screen, said display screen incorporating a plurality of substantially transparent row and column electrodes to provide projected capacitance touch sensing; and a plurality of touch sensing circuit modules coupled to said row and column electrodes to sense touching of said display screen, wherein each said touch sensing circuit module has a plurality of sensor connections for connecting to a plurality of said electrodes and a touch sense data output, and wherein each said touch sensing circuit module is configured to interpolate between sensed touching of a plurality of adjacent said electrodes simultaneously and to output corresponding interpolated touch sense data at a resolution greater than that of a spacing between said electrodes; and a sensing system data output to provide row and column interpolated touch sense data; characterised in that each of said row electrodes and each of said column electrodes has a break to divide the electrode into first and second portions, one of said first and second portions having a first electrical connection at one side of the display screen, the other of said first and second portions having a second electrical connection at an opposite side of the display screen; wherein a first of said touch sensing circuit modules has said plurality of sensor connections connected to said first electrical connections of said row electrodes, wherein a second of said touch sensing circuit modules has said plurality of sensor connections connected to said second electrical connections of said row electrodes, wherein a third of said touch sensing circuit modules has said plurality of sensor connections coupled to said first electrical connections of said column electrodes, and wherein a fourth of said touch sensing circuit modules has said plurality of sensor connections coupled to said second electrical connections of said column electrodes; and wherein the sensing system further comprises a controller coupled to said touch sense data outputs of said first, second, third and fourth touch sensing circuit modules, and wherein said controller is configured to select said interpolated touch sense data from one of said first and second touch sensing circuit modules to provide said row interpolated touch sense data from said sensing system data output, wherein said selection of said first and second touch sensing circuit modules is responsive to said interpolated touch sense data from said third and fourth touch sensing circuit modules, and wherein said controller is configured to select said interpolated touch sense data from one of said third and fourth touch sensing circuit modules to provide said column interpolated touch sense data from said sensing system data output, wherein said selection of said interpolated touch sense data from one of said third and fourth touch sensing circuit modules is responsive to said interpolated touch sense data from said first and second touch sensing circuit modules.

In embodiments of the sensing system one touch sensing circuit module is provided for the connections to each end of a broken row and column line and, in embodiments, substantially all of the electrical connections to each of the two ends of the row electrode lines and of the column electrode lines go to a single touch sensing circuit module which performs interpolation across the electrode lines.

Breaking the row and column electrode lines, in particular approximately half way across the display screen, effectively halves the length of ITO electrode employed for the touch sensing. In theory it would be possible to segment the display screen into quadrants and to apply one touch sensing circuit module or integrated circuit to form touch sensing for each quadrant, but this would create problems at the boundaries of the quadrants, in particular when interpolating touch sensed position between electrode lines. Since interpolation uses the "raw" sensor data (that is, data defining degree of mutual capacitance in between row and column electrodes) to interpolate across quadrant boundaries would seem to require one touch sensing circuit module to pass the raw X-and Y-sensing data to the adjacent touch sensing circuit modules on the X- and Y- sides respectively, to enable the combined data to be processed to interpolate position across quadrant boundaries. However this is a relatively inefficient both in terms of data connections and power requirements.

In preferred embodiments, therefore, the display screen is segmented so that as well as the row and column electrodes only going approximately half way across the display screen from either side, all the ends of the electrodes at each side of the display screen go into respective first, second, third and fourth touch sensing circuit modules (or integrated circuits). Then the pair of (interpolating) Y-position (row) sensing modules can be employed to determine which column sensing module is to be employed to determine the X-(column) position, by identifying whether the touch row is towards one or the other end of a column, and hence toward one or the other of the X-(column) sensing modules. In a corresponding way the (interpolating) output from the column sensing modules can be used to determine which of the row sensing modules to employ when sensing (interpolator) Y- position. Further, in preferred embodiments employing one touch sensing integrating circuits to perform the function of each touch sensing circuit module enables these integrated circuits (ICs) each to be located physically adjacent one side (or edge) of the display screen, close to the connections to the relevant ends of the row and column electrode lines, thus reducing the distance over which interconnects need travel and minimising external noise. In preferred embodiments each of these touch sensing circuit modules or ICs has a serial data output, for example a SPI (Serial Peripheral Interface) bus or I2C (Inter-Integrated circuit) bus.

In preferred implementations the controller is implemented in a separate microprocessor or microcontroller, for example an AVR (registered trademark) microprocessor from Atmel Corp. In embodiments the touch sensing circuit modules perform interpolation of sensed position between the electrodes and the controller microprocessor selects the interpolated data for output. Depending on the configuration of the touch sensing, multi-touch detection may be performed or the controller may be configured to perform multi-touch rejection based on the outputs from the touch sensing circuit modules. It will be appreciated that a single physical integrated circuit could incorporate two touch sensing circuit modules, and that therefore a single physical device could provide two separate slider channels.

In preferred embodiments the controller microprocessor also identifies gestures and/or geometrical objects such as lines or circles which are primitives for gestures and outputs corresponding object and/or gesture data in preferred embodiments the controller microprocessor also outputs the row and column interpolated position data as well as the higher level data in order to enable corresponding image data to be written back to the display either as an indication on the display of where the display was touched or in the form of an icon or other response to an interpreted gesture, or both. This approach facilitates, for example, a combination of gesture recognition and user annotation of a document on an electronic document reader since having the row and column interpolated position data available in addition to gesture recognition data enables such annotation as well as reducing overall data flow and facilitating division of different types of processing task between the controller and a higher level, main processor.

Embodiments of the above described touch screen sensing system are particularly useful when applied to a large electrophoretic display screen, for example a display screen having an active or rewriteable-display area with a diagonal dimension of at least 20cm, especially a flexible or flex-tolerant electrophoretic display screen, since these present particular problems for projected capacitance touch sensing. In preferred embodiments of the electronic document reading device the active display area is at least sufficient to display a page of text at A4 or US Letter size at at least 0.7:1 scale.

In preferred embodiments of such an electronic document reading device the controller of the projected capacitance touch screen sensing system also performs power management. Thus such a document reading device may also comprise a main processor to control display of information on the display screen, a (rechargeable) battery and a controllable power switch between the main processor and the battery to entirely switch off power to the main processor. In a document reader with an electrophoretic display, the display is non-volatile, that is the image remains even when the power is removed, and it is therefore possible to operate in a mode in which the document reading device is in the main switched off. Only being powered up when some action need be performed, more particularly to change or update the displayed information. In such a system it is desirable to switch power off entirely from the main processor since even a few microamps of stand by current can decrease the battery life from potentially, a few months down to potentially, a few days. However in order to operate in a mode in which power to the main processor is entirely removed the touch sensing circuit modules and controller may be powered in order that a wake-up gesture may be recognised and power applied to the main processor to perform the desired action (the wake-up gesture need not be a gesture dedicated to waking the device up but may comprise, for example, a page turn gesture). Thus sensing of touch of the display screen and interpretation of an applied gesture can be performed by low power circuitry and, when a gesture is recognised, the main processor can be powered up in response to perform the desired action. To further reduce power it is desirable that rather than the touch sensing circuit modules be continually powered, these may be polled at intervals and power maintained only when a touch is sensed. For this reason it is desirable that the touch sensing circuit modules (for example PsoCs (RTM)) power up in a short time interval, for example less than 1ms.

In embodiments the main processor performs a cold boot in response to the power supply to the main processor being turned on, prior to performing the desired action. For this reason in embodiments only a selected portion of the operating system of the main processor is loaded, that needed to perform the desired action, in order that the processor starts up quickly to enhance the user experience.

In a related aspect the invention provides a method of sensing user touch of an electronic display screen having four sides comprising a first pair of opposite sides and a second pair of opposite sides orthogonal to the first, and having a plurality of substantially transparent row and column electrode lines in front of information displayed by said display screen, the method comprising and characterised by splitting each said electrode line into two portions, one connecting substantially all of the electrode lines at each said side to a single touch sensing circuit module; using touch sensed by the modules on one said pair of opposite sides to determine which of the modules connected to the orthogonal pair of opposite sides to use for detecting position along a direction parallel to said orthogonal pair of opposite sides; and using a said determined module on each of the two orthogonal sides of said display screen to determine an X-Y position of touch of said display screen sensed by said determined modules.

In preferred embodiments of the method, as previously described, preferably a touch sensing module is connected to substantially all the electrode lines at a side or edge of the display screen, to enable interpolation between touch sensed by these electrode lines without communication between a adjacent touch sensing modules.

The invention also provides a carrier such as a disc or non-volatile memory storing processor control code for implementing the functions of the controller in the above described systems/methods.

### BRIEF DESCRIPTION OF THE DRAWINGS

The invention will now be further described by way of example only, with reference to the accompanying figures in which:
Figures 1a to 1c show, respectively, a front, display face view, a rear view, and a vertical cross-section view of an electronic document reading device;
Figure 2 shows a detailed vertical cross-section through a display portion of the device of Figure 1;
Figures 3a and 3b show, respectively, a block diagram of a power management system for electronic document reading device according to an embodiment of the invention, and a flow diagram of a cold boot procedure employed by the power management system of figure 3a; and
Figure 4 shows a projected capacitance touch screen sensing system according to an embodiment of the invention.

### DETAILED DESCRIPTION OF PREFERRED EMBODIMENTS

We first describe an example of an electronic document reading device, to illustrate the context in which embodiments of the invention may be employed. Embodiments of the invention can be especially useful for large screen devices, in particular devices with large, flexible electrophoretic display screens as described further below. However applications of embodiments of the invention are not limited to such devices and also include, for example, a device with an LCD display screen on a glass substrate.

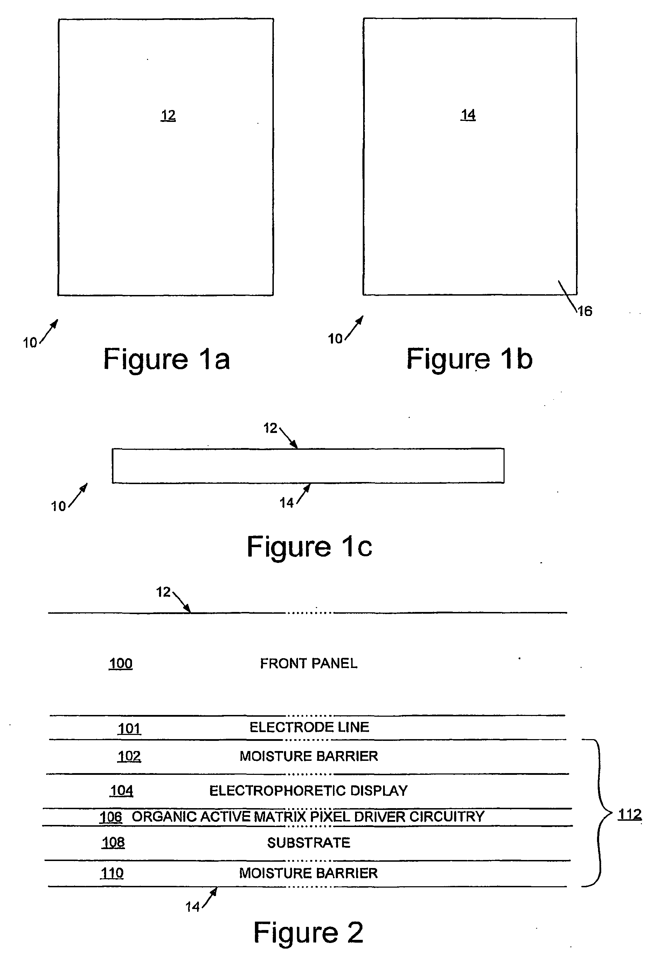

Referring to Figures 1a to 1c, these schematically illustrate an electronic document reading device 10 having a front display face 12 and a rear face 14. As can be seen from Figure 1c, in preferred embodiments the display surface 12 is substantially flat to the edges of the device. However in embodiments described later it will be seen that the electronic (electrophoretic) display does not extend right to the edges of the display surface 12, and rigid control electronics are incorporated around the edges of the electronic display, this approach reducing the overall thickness of the device and thus facilitating flex-tolerance, at the expense of making the overall area of the device slightly larger.

Referring now to Figure 2, this illustrates a vertical cross-section through a display region of the device between the frame members 16. The drawing is not to scale.

As can be seen, in preferred embodiments the device has a substantially transparent front panel 100, for example made of Perspex (RTM), which acts as a structural member. The active matrix pixel driver circuitry layer 106 may comprise an array of organic or inorganic thin film transistors as disclosed, for example, in WO01/47045. However such a front panel is not necessary - sufficient physical stiffness could be provided, for example, by the substrate 108 optionally in combination with one or both of the moisture barriers 102, 110.

The illustrated example of the structure comprises a substrate 108, typically of plastic such as PET (polyethylene terephthalate) on which is fabricated a thin layer 106 of organic active matrix pixel driver circuitry. Attached over this, for example by adhesive, is an electrophoretic display 104, although alternative display media such as an organic LED display medium or liquid-crystal display medium may also be used. A moisture barrier 102 is provided over the electronic display 104, for example of polyethylene and/or Aclar™, a fluoropolymer (polychlorotrifluoroethylene-PCTFE). A moisture barrier 110 is also preferably provided under substrate 108; since this moisture barrier does not need to be transparent preferably moisture barrier 110 incorporates a metallic moisture barrier such as a layer of aluminium foil. This allows the moisture barrier to be thinner, hence enhancing overall flexibility.

In preferred embodiments the display medium is a reflective display medium, in particular an electrophoretic display medium and the backplane comprises a flexible substrate such as PET or PEN (polyethylene naphthalene). Preferably the backplane is fabricated using solution-based transistors preferably patterned by techniques such as direct-write printing, laser ablation or photolithography. Further details can be found in the applicant's earlier patent applications, including, in particular, WO 01/47045, WO 2004/070466, WO 01/47043, WO 2006/059162, WO 2006/056808, WO 2006/061658, WO 2006/106365 and PCT/GB2006/050265.

Approximate example thicknesses for the layers are as follows: 100 µm for moisture barrier 110, 200 µm for substrate 108, 5-6 µm for active layer 106, 190 µm for display 104, and 200 µm for moisture barrier 102. The set of layers 102-110 form an encapsulated electronic display 112; preferably this is bonded, for example by adhesive, to a touch sensor as described, and a transparent display panel 100. The front panel 100 may have a thickness in the range 0.1-2 mm, for example approximately 1 mm or approximately 0.2 mm.

As illustrated, conductive electrode lines 101, such as ITO, for touch sensing are located behind the front panel of the device, although in alternative implementations they may be located elsewhere. A set of transparent touch screen electrodes may be laminated onto the display medium and display backplane (using a pressure sensitive adhesive).

An electrode layer may be a conductive polymer or a metallic layer such as copper, nickel, gold or silver or printable metal. The layer may be deposited using techniques such as vacuum deposition, electroplating and printing techniques, such as screen printing. An intermediate insulating layer may be deposited by techniques such spray or blade coating or printing techniques. Connections to the electrode layers may be formed, for example, mechanically, say with the aid of an adhesive, or through a welding or soldering process.

Embodiments of the device thus incorporate a capacitive touch sensitive electrophoretic display, preferably a projected capacitance touch sensitive electrophoretic display using a touch sensing system as described in more detail later. This may be used to identify gestures for selecting documents and/or pages, turning pages forward and back and the like. In embodiments the touch sense processing may be such that gestures are location/orientation agnostic, so that a user may perform the same gesture at any location to produce the same result and, in embodiments, independent of orientation (portrait or landscape) of the device. In such embodiments, documents may also be electronically "marked-up", with mark-up data being written to or being associated with the electronic document being displayed. Additional user controls, optionally also touch sensitive, may be provided in the border around the active display region.

In embodiments, the electronic document reader has connectors located along an edge of the device to enable the device to be connected to other electronic devices, such as a laptop or desktop computer, a PDA (Personal Digital Assistant), a mobile phone or 'smart' phone, or other such devices. A USB (universal serial bus) and one or more wireless interfaces (for example a infrared and/or Bluetooth™ interface) may also be provided to enable documents to be transferred to and from the electronic document reader.

### Power management

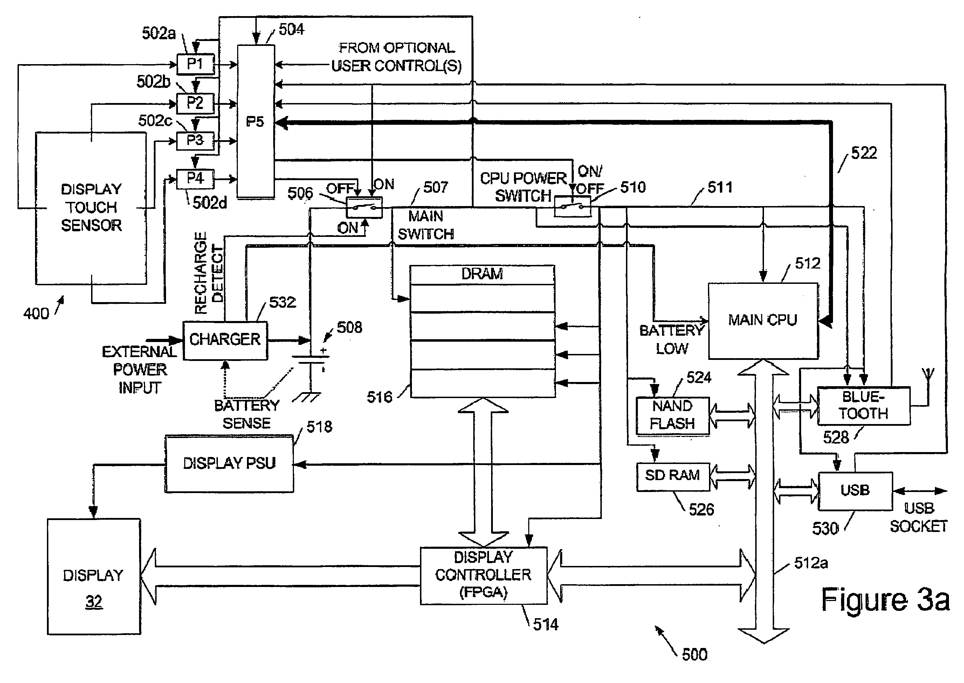

Referring now to figure 3a, this shows preferred power management architecture 500 for an electronic document reading device incorporating an electrophoretic display 32.

The electronic document reading device includes a touch sensitive display 400, as previously described. This enables the user to control the device through touch and/or gesture; in embodiments no power on/off switch or control is needed. In preferred embodiments data from the touch sensing electrodes is processed by a set of dedicated processors 502a-d, one *per* side of the display, in embodiments PSoC (Registered Trade Mark) microcontroller devices available for example from Cypress Semiconductor Corporation. Each of these provides an input to a further, control processor 504 via a serial I2C bus, in embodiments an A VRmega48 device from Atmel (Registered Trade Mark) Corp, which includes on-chip Flash, RAM, and EEPROM. Processor 504 processes data from the touch sensing processors to integrate this data and make touch decisions (as described in more detail below), as well as to identify gesture primitives and/or gestures, and provides processed touch sensed information to a main CPU (Central Processing Unit) 512 of the electronic document reading device via a bidirectional serial bus 522, for example an SPI bus. Processor 504 also provides a number of power control functions, described below.

The touch sensitive display 400 can respond to a conductive stylus as well as to a finger. In this case XY location data from the processors 502a-d can be passed to the main processor 512 in addition to recognised gesture or gesture primitive data, to enable a user to write on the display with a stylus and the CPU 512 to processes this data and provides it to the display controlled 514 for display, for annotation of a document.

Power for the electronic document reading device is provided from a rechargeable battery 508, for example a 3 volt lithium battery, via a main switch 506 which switches power on and off to the entire device. The switch 506 has at least one control input for controlling the switch on and off and in embodiments comprises a low-on-resistance CMOS switch, more generally a solid state switch such as a MOS-FET switch. A first power supply bus 507 provides the switched power from the main switch a secondary, CPU power switch 510, again comprising a controllable CMOS switch, which in turn provides power to a second, switched power bus 511.

The electronic document reading device includes a main CPU 512, for example an ARM (Registered Trade Mark) device having a bus 512a coupling the device to NAND Flash 524, SD RAM 526, a Bluetooth interface 528, and a USB interface 530 as well as, optionally, to other peripheral devices. bus 512a also couples the main CPU 512 to a display controller at 514, for example implemented as an FPGA (Field Programmable Gate Array) or ASIC (Application Specific Integrated Circuit), which in turn drives display 32. In embodiments the CPU and display controller are implemented on a single chip for example using a customisable microcontroller such as an Atmel CAP 9 series, the display controller being implemented using an on-chip programmable block.

The display 32 has a dedicated display power supply unit 518 to provide the relatively high voltages used to drive the electrophoretic display from the battery 508; these may be of order tens of volts. In the illustrated embodiment the display controller 514 is coupled to dynamic RAM 516 comprising blocks of memory at least one of which has its own, separate power supply. The DRAM 516 stores data for display controller 514 and has a portion for storing data representing a current state of the electrophoretic display which has a separately switchable power supply; memory 516 may physically comprise either a single memory device or multiple separate memory devices.

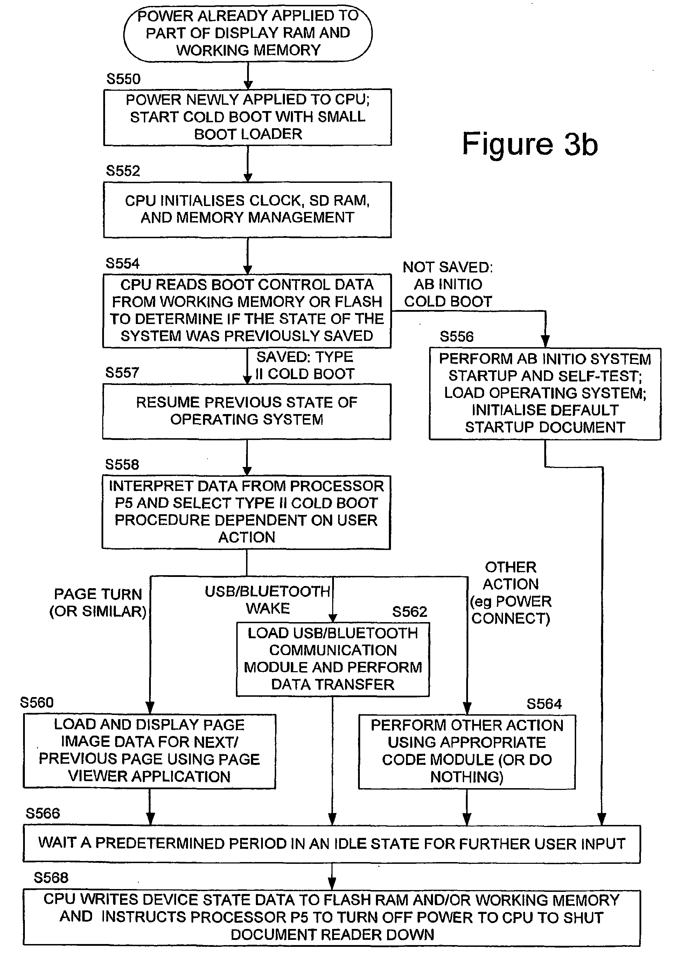

In Figure 3 a power supply rails are shown with triangular arrow heads and signal/control lines are shown using arrow heads with a slightly indented rear. Thus it can be seen that power bus 511, as well as providing a power to the main CPU 512, also provides a power supply to memory elements 524, 526, peripheral devices 528, 530, to the display controller 514 and display power supply 518, and to a first part of the display memory 516. The main power supply bus 507 provides power to a second part of the display memory, to processors 502a-d and to processor 504 (which provide touch-sense and power management functions). This power supply bus also provides a second power supply to Bluetooth interface 528. A charger 532 has a wired or wireless external power input and operates to charge battery 508, as well as providing a battery status sense function and a low battery output signal to the main CPU 512 (in other embodiments such a battery status sense function may be provided in different ways). The charger 523 also provides a recharge detect signal, as illustrated to main switch 506, but in other embodiments this may be configured differently, for example to provide a signal to process 504.

Broadly speaking, in operation processor 504 controls the CPU power switch 510 to switch on and off power to the main CPU, the CPU memory and peripherals, the display RAM, display controller and display power supply only when it is needed for example in response to a user request for a page term. To provide a long battery life, preferably of order months, since even the leakage current through the CPU is unacceptably high rather than put the main CPU 512 into a standby state, the power supply is entirely removed from the CPU and from as many of its associated elements as possible. However preferably a power supply is maintained to the second part of DRAM 516, which stores data representing a current state of the electrophoretic display. As power to the entire CPU is turned off, when the power is re-applied the main CPU by definition performs a cold boot which is potentially a slow process. It is therefore preferable to minimise the delay between re-applying power to the CPU and performing the desired user action, and storing a current state of the electrophoretic display helps to achieve this. When the desired user action has been performed, because the processor performs a cold boot in response to the user action, if desired the power to the CPU can simply be removed without prior notification to the CPU - that is a handshaking process requesting power down and having the CPU acknowledged that a power down can take place is not necessary.

In the illustrated embodiment, elements of the system which are not powered down by the CPU power switch 510 are the secondary processor 504 and the touch/gesture processors 502, so that the document reading device remains sensitive to a user touch/gesture when the main CPU is switched off. Alternatively, however, processor 504 may have one or more inputs from buttons or switches on the device to enable the main CPU to be restarted.

When the CPU power switch 510 is off preferably power is still applied to the Bluetooth (RTM) interface 528 so that, in embodiments, the Bluetooth (RTM) system has two power supplies, one to power the main Bluetooth system and a second, derived from bus 507, to provide a minimal amount of power to the Bluetooth system to provide a Bluetooth 'sniffing' function powering on a receiver at intervals to check whether a Bluetooth-compatible signal is locally present. The Bluetooth system 528 provides a signal to processor 504 when a Bluetooth compatible RF signal is detected and processor 504 can then control switch 510 to switch the main CPU on. In this way the device can be configured to automatically power up and connect to a Bluetooth network when one is present, (for example to perform automatic synchronisation when the device is brought into proximity with a Bluetooth-enabled host computer system.

Preferred embodiments of the electronic document reading device also include a main switch 506 configured to switch power on and off to the entire document reading device, for example in response to detection that the battery 508 is low. There are many different possible signal routes which could be employed. As illustrated charger 532 senses a condition of the battery and provides a signal to the main CPU 512 which either directly, or via processor 504, controls the main switch 506 off. However in other arrangements a charger 532 could directly control the main switch 506 off, or this control could be performed via a loop including processor 504 but not main CPU 512. The main switch 506 may be switched on, for example, by detection of recharging of the electronic document reading device and/or by a USB power detect function provided by USB interface 530 which detects when power is available from the connected USB socket. In embodiments this power source may additionally or alternatively be employed to recharge battery 508.

Referring now to figure 3b, this shows a flow diagram of a cold boot procedure employed by the power management architecture of figure 3 a. The procedure begins with no power at all applied to the CPU but with power applied to the second part of the display memory and preferably at least part of the working memory which stores the operating system and/or parameters for the operating system.

At step S550 power is applied to CPU 512 and the cold boot process begins, the CPU initialising the system clock (not shown in figure 3a for clarity), the SDRAM 526, the memory management and other elements of the system. The CPU 512 then reads boot control data from the working memory or Flash to determine whether booting is in response to a particular user action and hence whether there is a previously saved state of the system or whether the system is performing an *ab initio* start up of a type employed when main switch 506 is switched on (step S554). If the system is performing an *ab initio* cold boot then, at step S556 the system performs an *ab initio* start up including a self test, initialising the status of any stored documents, checking for software updates and the like. The procedure then continues to step S566, to await a user command. In preferred embodiments the *ab initio* boot procedure is used only when the device is first ever powered on or after an exception procedure, in particular when the battery has become discharged, reserving power entirely from the device, or in response to user operation of a (hidden) reset control.

At step S557, in embodiments where power is maintained to the working memory (SDRAM), then the state of the device at previous shut-down may be resumed by trading device state data from the working memory. This device state data may comprise one or more of register settings, operating system parameters and the operating system itself. Where power is not maintained to the working memory, this data may be retrieved from the Flash memory.

If the CPU 512 is performing a second type of cold boot, that is in response to a user action (which may include a connection to a USB interface or Bluetooth network) then at step S558 main CPU 512 selects a cold boot procedure dependent on the user action and determines whether the desired action can be performed with only a limited portion of the operating system, which is desirable, if possible, for speed of response. A preferred operating system is Windows CE (RTM). If the main CPU 512 was switched on in response to a page turn or similar page manipulation gesture then, at step 560, the main CPU loads the relevant page data from flash memory 524 and provides this to display controller 514 for display on electrophoretic display 32. In preferred embodiments this page data is stored in flash memory 524 in the form of image data which can be written to the display via the display controller without substantial further processing.

In general a page manipulation function may be performed by loading (only) a specific application to perform the desired function. In general in embodiments of the systems different functions of the device are performed by different applications which may be selectively loaded as required (by the user command causing the device to start up). In this way the effect of latency of a cold boot start prior to performing a user-specified action may be reduced. A similar procedure is performed at step S564 in response to other user actions, for example connecting power to the device after which it may simply wait for further user input.

If the cold boot of main CPU 512 was performed in response to a USB or Bluetooth wake signal then, step S562, in embodiments a USB or Bluetooth communications module is loaded and a data transfer procedure is started, typically to retrieve one or more documents or portions of documents from another computing device, for example a desktop or laptop computer system, PDA, mobile phone or any other type of processor-driven device. Optionally the synchronisation may include sending data back to the other computing device, for example annotation data for a displayed page captured by stylus sensor 520.

Once the main CPU has been turned on it preferably waits for a period in an idle state for any further user input/commands (S566). This helps to improve the user experience by reducing the number of cold boot start-ups where, for example, a user is performing a sequence of actions. If no further user input is received then, at step S568, the CPU 512 instructs processor 504 to turn off power to the CPU 512, to shut the document reader down. Prior to powering off the CPU the system writes the aforementioned device state data to the working memory (if power to this is being maintained) and/or to the Flash memory, thus performing a controlled shut-down. As previously mentioned, the electronic document reading device may be used for writing as well as reading, for example to annotate a page which is being read. A displayed document may include, for example, pictures, music and in general any material which may be printed to a page.

### Touch sensing

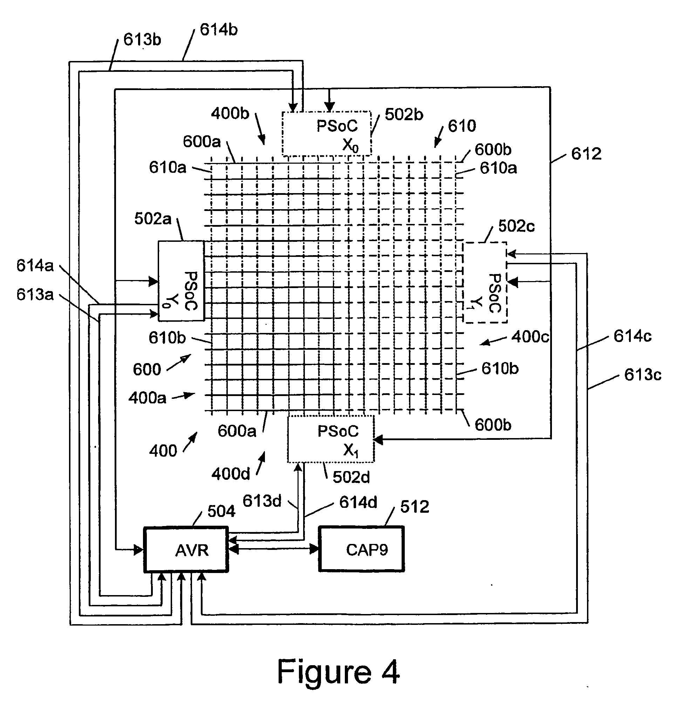

Referring now to figure 4 this shows an embodiment of a projected capacitance touch screen sensing system according to the invention, in which like elements to those of Figure 3a are indicated by like reference numerals. The touch sensor portion 400 of the display 32 comprises a plurality of transparent ITO row electrodes 600 and column electrodes 610. In one implementation a sensor array 400 comprising 30 columns by 38 rows was employed, with 5mm (pitch) sense elements. Each of the row electrodes is divided in the middle by a break in electrical conductivity into two portions 600a, 600b, and the column electrodes are likewise divided into two portions 610a, 610b. The "half electrode lines" on each side of the sensor array 400a-d are connected to a respective touch sensing circuit module 502a-d, in embodiments each implemented by an individual PSoC. In this way the sensing is split across 4 PsoCs. One advantage to segmenting the sensor array in this way is that a thinner ITO layer can be employed since the architecture can cope with an increased ITO resistance, thus improving optical clarity.

Each of the touch sensing circuit modules 502 is connected via a I2C serial bus 612 to a control processor 504. The control processor 504 also provides individual poll and acknowledge lines 613a-d, 614a-d. The controller 504 reports X and Y position data, strokes and gestures, in embodiments at a 50Hz rate, to the main processor 512, which processes the gesture information using typically a tablet mouse or stylus input device driver of an operating system such as WinCE^{™}. In embodiments an SPI bus connects controller 504 with main processor 512.

In operation the controller 504 is in control of the touch sensing system and polls the touch sense circuit modules 502 to start a scan. The circuit modules 502 are either sleeping or scanning and the controller 504 is in control of the power profile: the sleep power for a PSoC is of order 10µW and the wake up time is less than 100ms. Once activated the scan time is of order 20ms and a return bit map of the active lines is provided via the I2C bus 612. In one implementation the touch sense circuit modules 502 each comprised a CY8C24x94 device, using the Cypress^{™} slider library to provide sub-sensor resolution. The controller 504 handles merging of the X and Y coordinates and performs stroke and gesture recognition as well as, optionally, accommodating one or more "home" buttons. In more detail, the Y result determines which X result to use, and the X result determines which Y result to use. In more detail, referring to Figure 4 and to, say, the row (Y) position, either touch sense module 502a or touch sense module 502c could be used to provide his position, and modules 502b, d are employed to select which of modules 502a, c are employed, using module 502a, the Yₒ value, if the X position is less than half way across the screen and using the 502c module, Y₁ value, if the sensed touch position is more than half way across the screen. In a similar way the Yₒ/Y₁ modules determine which row touch sensing module 502b, d (Xₒ or X₁) to employ.

In principle this approach could be extended to, say, subdivide the rows vertically and/or the columns horizontally, for example using two row modules 502aa, 502ab to replace module 502a and so forth. Then modules 502b,d would select which pair of row touch sense modules (the left pair or the right pair) was employed, and optionally vice versa. It will be appreciated that this could be extended to 3 or more touch sense circuit modules along each side of the sensor array 400. However such an arrangement would employ communication between the touch sense circuit modules along each side of the sensor array, if interpolation across the electrodes at the boundaries between the modules were desired.

The above described architecture is further advantageous because the controller 504 is able to provide a single view of multi-touch rejection and in an arrangement of the type shown in Figure 4 complexity is reduced because there is no need for communications between touch sensing circuit modules 502.

In preferred implementations the controller 504 is also configured to identify linear strokes as primitives for gestures. This can be done by determining changes in detected X,Y touch position over a sequence of scans using either, for example, a simple moving average filter or more sophisticated Kalman filtering to improve detection. Preferred implementations restrict to 8 45° vectors, and once a stroke has been identified gesture by identification is straightforward. For example a curve may be mapped to a sequence of linear segments and/or stroke directions. Some examples of how letters may be defined are as follows:
Z is {W→E, NE→SW, W→E}
N is {+90°, -45°, +90°}
V is {-45°, +45°}.

Stroke identification and gesture recognition can be implemented, for example, either using a state machine or by employing a sliding window and pattern matching; in either case the code is small and fast.

In one implementation recognised gestures are reported to the main processor running windows CE via a keyboard handler interface, and XY coordinates are reported to windows CE via a tablet interface. The controller 504 also in embodiments, wakes up the main processor 512 and controls power management, as previously described. In preferred implementations the XY coordinates reported to the main processor are used to enable annotation of a displayed document.

Preferred implementations of the touch sensing system have been described with specific reference to a projected capacitance touch screen sensing system, but the skilled person will appreciate that the segmented sensor design and sensing module control and selection architecture may be employed in the context of other types of capacitive sensing and, in principle, with non-capacitive touch sensors.

No doubt many other effective alternatives will occur to the skilled person. It will be understood that the invention is not limited to the described embodiments and encompasses modifications apparent to those skilled in the art lying within the scope of the claims appended hereto.

## Claims

1. A projected capacitance touch screen sensing system, the system comprising:
an electronic display screen (32), said display screen incorporating a plurality of substantially transparent row (600) and column (610) electrodes to provide projected capacitance touch sensing; and
a plurality of touch sensing circuit modules (502a-d) coupled to said row (600) and column (610) electrodes to sense touching of said display screen (32), wherein each said touch sensing circuit module has a plurality of sensor connections for connecting to a plurality of said electrodes and a touch sense data output, and wherein each said touch sensing circuit module is configured to interpolate between sensed touching of a plurality of adjacent said electrodes (600, 610) simultaneously and to output corresponding interpolated touch sense data at a resolution greater than that of a spacing between said electrodes; and
a sensing system data output to provide row and column interpolated touch sense data;
**characterised in that** each of said row electrodes (600) and each of said column electrodes (610) has a break to divide the electrode into first (600a, 610a) and second portions (600b, 610b), one of said first and second portions having a first electrical connection at one side of the display screen, the other of said first and second portions having a second electrical connection at an opposite side of the display screen;
wherein a first of said touch sensing circuit modules (502a) has said plurality of sensor connections connected to said first electrical connections of said row electrodes (600a), wherein a second of said touch sensing circuit modules (502c) has said plurality of sensor connections connected to said second electrical connections of said row electrodes (600b), wherein a third of said touch sensing circuit modules (502b) has said plurality of sensor connections coupled to said first electrical connections of said column electrodes (610a), and wherein a fourth of said touch sensing circuit modules (502d) has said plurality of sensor connections coupled to said second electrical connections of said column electrodes (610b); and
wherein the sensing system further comprises a controller (504) coupled to said touch sense data outputs of said first, second, third and fourth touch sensing circuit modules (502a-d), and wherein said controller (504) is configured to select said interpolated touch sense data from one of said first and second touch sensing circuit modules (502a,c) to provide said row interpolated touch sense data from said sensing system data output, wherein said selection of said first and second touch sensing circuit modules is responsive to said interpolated touch sense data from said third and fourth touch sensing circuit modules (502b,d), and wherein said controller is configured to select said interpolated touch sense data from one of said third and fourth touch sensing circuit modules (502b,d) to provide said column interpolated touch sense data from said sensing system data output, wherein said selection of said interpolated touch sense data from one of said third and fourth touch sensing circuit modules is responsive to said interpolated touch sense data from said first and second touch sensing circuit modules (502a,c).

2. A projected capacitance touch screen sensing system as claimed in claim 1 wherein, for each side of four lateral sides of said display screen (32), substantially all of said electrode electrical connections (600, 610) on the side of the display screen connect to a single said touch sensing circuit module (502a-d).

3. A projected capacitance touch screen sensing system as claimed in claim 1 or 2 wherein said controller (504) is configured to use said touch sense data output from said first (502a) and second (502c) touch sensing circuit modules connected to said electrical connections of said row electrodes (600) to identify whether said touch is closer to said first (610a) or to said second (610b) electrical connections of said column electrodes (610) and respectively to select said touch sense data output of said third (502b) or said fourth (502d) touch sensing circuit module, and wherein said controller is configured to use said touch sense data output from said third (502b) and fourth (502d) touch sensing circuit modules connected to said electrode connections of said colunm electrodes (610) to identify whether said touch is closer to said first (600a) or to said second (600b) electrical connections of said row electrodes (600) and respectively to select said touch sense data output of said first (502a) or said second (502c) touch sensing circuit module.

4. A projected capacitance touch screen sensing system as claimed in any preceding claim wherein said breaks in said row (600) and colunm (610) electrodes are substantially half way along said row and column electrodes such that said first (600a, 610a) and second portions (600b, 610b) comprise first and second halves of an electrode line.

5. A projected capacitance touch screen sensing system as claimed in any preceding claim wherein each said touch sensing circuit module (502a-d) comprises a touch sensing integrated circuit, and wherein each said touch sensing integrated circuit is physically located adjacent a said side of said display screen bearing electrical connections for the electrode portions to which it is connected.

6. A projected capacitance touch screen sensing system as claimed in any preceding claim wherein said data output of each of said touch sensing circuit modules is coupled to said controller (504) via a communications bus, and wherein said controller has an output coupled to said sensing system data output and is configured to perform multi-touch rejection and to provide said row and column interpolated touch sense data.

7. A projected capacitance touch screen sensing system as claimed in any preceding claim wherein said controller (504) is further configured to identify one or both of sensed touching defining geometrical objects and gestures in said row and column interpolated touch sense data to output one or both of corresponding object and gesture data.

8. A projected capacitance touch screen sensing system as claimed in claim 7 further comprising an additional or main processor (512) coupled to said sensing system data output to receive said row and column interpolated touch sense data and said object or gesture data and to generate corresponding image data from said row and column interpolated touch sense data for writing to said display screen (32) to display an image dependent on said sensed touching.

9. An electronic document reading device comprising the projected capacitance touch screen sensing system of any preceding claim, wherein said electronic display screen (32) is a flex-tolerant electrophoretic display screen having an active display area with a diagonal dimension of at least 20cm.

10. An electronic document reading device comprising the projected capacitance touch screen sensing system of any one of claims I to 8, and further comprising;
a main processor (512) to control display of information on said display screen (32);
a battery (508) to provide power for said main processor, said touch sensing circuit modules and said controller; and
a controllable power switch (510) coupled between said battery (508) and said main processor (512) to switch power to said main processor on and off, said controllable power switch having a control line coupled for control by said controller, and wherein said controller is configured to detect a user wake-up gesture on said electronic display screen (32) and to switch power to said main processor on in response to said detection.

11. An electronic document reading device as claimed in claim 10 wherein said touch sensing circuit modules are maintained in a reduced power consumption state when said controllable switch (510) is off and, wherein said controller is configured to poll said touch sensing circuit modules (502a-d) periodically to detect said user wake-up gesture.

12. A method of sensing user touch of an electronic display screen (32) having four sides comprising a first pair of opposite sides and a second pair of opposite sides orthogonal to the first, and having a plurality of substantially transparent row (600) and column (610) electrode lines in front of information displayed by said display screen, the method comprising and **characterised by**:
splitting each said electrode line into two portions (600a,b; 610a,b), one connecting substantially all of the electrode lines at each said side to a single touch sensing circuit module (502a-d);
using touch sensed by the modules (502) on one said pair of opposite sides to determine which of the modules connected to the orthogonal pair of opposite sides to use for detecting position along a direction parallel to said orthogonal pair of opposite sides; and
using a said determined module on each of the two orthogonal sides of said display screen to determine an X-Y position of touch of said display screen (32) sensed by said determined modules.

13. A method as claimed in claim 12 further comprising using a said module connecting substantially all of the electrode lines (600, 610) at a said side of the display screen (32) to interpolate between touch sensed by said electrode lines to determine said X-Y position.

14. A carrier carrying processor control code for implementing the method of claim 12 or 13, wherein said processor control code is configured to use touch sensed by the modules (502) on one said pair of opposite sides to determine which of the modules connected to the orthogonal pair of opposite sides to use for detecting position along a direction parallel to said orthogonal pair of opposite sides; and to use said determined module on each of two orthogonal sides of said display screen (32) to determine an X-Y position of touch of said display screen sensed by said determined modules.

## Patentansprüche

1. Projiziert-kapazitives Berührungsbildschirmerfassungssystem, wobei das System umfasst:
einen elektronischen Anzeigeschirm (32), wobei der Anzeigeschirm eine Vielzahl von im Wesentlichen transparenten Zeilen- (600) und Spalten-(610-)Elektroden einschließt, um projiziert-kapazitive Berührungserfassung zu ermöglichen; und
eine Vielzahl von Berührungserfassungsschaltungsmodulen (502a-d), die mit den Zeilen- (600) und Spalten-(610-)Elektroden gekoppelt sind, um Berührungen des Anzeigeschirms (32) zu erfassen, worin jedes besagte Berührungserfassungsschaltungsmodul eine Vielzahl von Sensorverbindungen zum Verbinden mit einer Vielzahl der Elektroden und einen Berührungserfassungsdatenausgang hat, und worin jedes besagte Berührungserfassungsschaltungsmodul dafür konfiguriert ist, zwischen erfassten Berührungen einer Vielzahl von benachbarten der Elektroden (600, 610) gleichzeitig zu interpolieren und entsprechende interpolierte Berührungserfassungsdaten in einer größeren Auflösung als der eines Abstandes zwischen den Elektroden auszugeben; und
einen Erfassungssystemdatenausgang, um zeilen- und spalteninterpolierte Berührungserfassungsdaten bereitzustellen;
**dadurch gekennzeichnet, dass** jede der Zeilenelektroden (600) und jede der Spaltenelektroden (610) eine Unterbrechung hat, um die Elektrode in einen ersten (600a, 610a) und zweiten (600b, 610b) Abschnitt zu unterteilen, wobei einer des ersten und zweiten Abschnitts eine erste elektrische Verbindung an einer Seite des Anzeigeschirms hat und der andere des ersten und zweiten Abschnitts eine zweite elektrische Verbindung an einer gegenüberliegenden Seite des Anzeigeschirms hat;
worin bei einem ersten der Berührungserfassungsschaltungsmodule (502a) die Vielzahl von Sensorverbindungen mit den ersten elektrischen Verbindungen der Zeilenelektroden (600a) gekoppelt ist, worin bei einem zweiten der Berührungserfassungsschaltungsmodule (502c) die Vielzahl von Sensorverbindungen mit den zweiten elektrischen Verbindungen der Zeilenelektroden (600b) gekoppelt ist, worin bei einem dritten der Berührungserfassungsschaltungsmodule (502b) die Vielzahl von Sensorverbindungen mit den ersten elektrischen Verbindungen der Spaltenelektroden (610a) gekoppelt ist, und worin bei einem vierten der Berührungserfassungsschaltungsmodule (502d) die Vielzahl von Sensorverbindungen mit den zweiten elektrischen Verbindungen der Spaltenelektroden (610b) gekoppelt ist; und
worin das Erfassungssystem ferner eine Steuerungseinrichtung (504) umfasst, die mit den Berührungserfassungsdatenausgängen des ersten, zweiten, dritten und vierten Berührungserfassungsschaltungsmoduls (502a-d) gekoppelt ist, und worin die Steuerungseinrichtung (504) dafür konfiguriert ist, die interpolierten Berührungserfassungsdaten von einem des ersten und zweiten Berührungserfassungsschaltungsmoduls (502a,c) auszuwählen, um die zeileninterpolierten Berührungserfassungsdaten von dem Berührungserfassungsdatenausgang bereitzustellen, worin die Auswahl des ersten und zweiten Berührungserfassungsschaltungsmoduls auf die interpolierten Berührungserfassungsdaten von dem dritten und vierten Berührungserfassungsschaltungsmodul (502b,d) anspricht, und worin die Steuerungseinrichtung dafür konfiguriert ist, die interpolierten Berührungserfassungsdaten von einem des dritten und vierten Berührungserfassungsschaltungsmoduls (502b,d) auszuwählen, um die spalteninterpolierten Berührungserfassungsdaten von dem Berührungserfassungsdatenausgang bereitzustellen, worin die Auswahl der interpolierten Berührungserfassungsdaten von einem des dritten und vierten Berührungserfassungsschaltungsmoduls auf die interpolierten Berührungserfassungsdaten von dem ersten und zweiten Berührungserfassungsschaltungsmodul (502a,c) anspricht.

2. Projiziert-kapazitives Berührungsbildschirmerfassungssystem nach Anspruch 1, worin für jede Seite von vier seitlichen Seiten des Anzeigeschirms (32) im Wesentlichen alle der elektrischen Elektrodenverbindungen (600, 610) auf der Seite des Anzeigeschirms mit einem einzigen besagten Berührungserfassungsschaltungsmodul (502a-d) verbunden sind.

3. Projiziert-kapazitives Berührungsbildschirmerfassungssystem nach Anspruch 1 oder 2, worin die Steuerungseinrichtung (504) dafür konfiguriert ist, die von dem ersten (502a) und zweiten (502c) Berührungserfassungsschaltungsmodul, die mit den elektrischen Verbindungen der Zeilenelektroden (600) verbunden sind, ausgegebenen Berührungserfassungsdaten zu verwenden, um herauszufinden, ob die Berührung näher an den ersten (610a) oder an den zweiten (610b) elektrischen Verbindungen der Spaltenelektroden (610) ist, und jeweils den Berührungserfassungsdatenausgang des dritten (502b) bzw. vierten (502d) Berührungserfassungsschaltungsmoduls auszuwählen, und worin die Steuerungseinrichtung dafür konfiguriert ist, die von dem dritten (502b) oder dem vierten (502d) Berührungserfassungsschaltungsmodul, die mit den elektrischen Verbindungen der Spaltenelektroden (610) verbunden sind, ausgegebenen Berührungserfassungsdaten zu verwenden, um herauszufinden, ob die Berührung näher an den ersten (600a) oder an den zweiten (600b) elektrischen Verbindungen der Zeilenelektroden (600) ist, und jeweils den Berührungserfassungsdatenausgang des ersten (502a) bzw. zweiten (502c) Berührungserfassungsschaltungsmoduls auszuwählen.

4. Projiziert-kapazitives Berührungsbildschilmerfassungssystem nach einem der vorhergehenden Ansprüche, worin die Unterbrechungen in den Zeilen- (600) und Spalten-(610-)Elektroden im Wesentlichen auf halbem Wege entlang der Zeilen- und Spaltenelektroden sind, so dass die ersten (600a, 610a) und zweiten (600b, 610b) Abschnitte erste und zweite Hälften einer Elektrodenleitung umfassen.

5. Projiziert-kapazitives Berührungsbildschirmerfassungssystem nach einem der vorhergehenden Ansprüche, worin jedes besagte Berührungserfassungsschaltungsmodul (502a-d) einen integrierten Berührungserfassungsschaltkreis umfasst, und worin jeder besagte integrierte Berührungserfassungsschaltkreis physisch an eine besagte Seite des Anzeigeschirms angrenzend angeordnet ist, die elektrische Verbindungen für diejenigen Elektrodenabschnitte trägt, mit denen er verbunden ist.

6. Projiziert-kapazitives Berührungsbildschirmerfassungssystem nach einem der vorhergehenden Ansprüche, worin der Datenausgang jedes der Berührungserfassungsschaltungsmodule über einen Kommunikationsbus mit der Steuerungseinrichtung (504) gekoppelt ist und worin die Steuerungseinrichtung einen mit dem Berührungserfassungsdatenausgang gekoppelten Ausgang hat und dafür konfiguriert ist, Mehrfachberührungsablehnung durchzuführen und die zeilen- und spalteninterpolierten Berührungserfassungsdaten bereitzustellen.

7. Projiziert-kapazitives Berührungsbildschirmerfassungssystem nach einem der vorhergehenden Ansprüche, worin die Steuerungseinrichtung (504) ferner dafür konfiguriert ist, eines oder beides von erfassten Berührungen zu erkennen, die geometrische Objekte und Gesten in den zeilen- und spalteninterpolierten Berührungserfassungsdaten definieren, um eines oder beides von entsprechenden Objekt- und Gestendaten auszugeben.

8. Projiziert-kapazitives Berührungsbildschirmerfassungssystem nach Anspruch 7, ferner einen Zusatz- oder Hauptprozessor (512) umfassend, der mit dem Berührungserfassungsdatenausgang gekoppelt ist, um die zeilen- und spalteninterpolierten Berührungserfassungsdaten und die Objekt- oder Gestendaten zu empfangen und entsprechende Bilddaten aus den zeilen- und spalteninterpolierten Berührungserfassungsdaten zum Schreiben auf den Anzeigeschirm (32) zu erzeugen, um ein Bild anzuzeigen, das von der erfassten Berührung abhängt.

9. Elektronische Dokumentlesevorrichtung, die das projiziert-kapazitive Berührungsbildschirmerfassungssystem nach einem der vorhergehenden Ansprüche umfasst, worin der elektronische Anzeigeschirm (32) ein biegetoleranter elektrophoretischer Anzeigeschirm mit einem aktiven Anzeigebereich mit einem Diagonalmaß von mindestens 20 cm ist.

10. Elektronische Dokumentlesevorrichtung, die das projiziert-kapazitive Berührungsbildschirmerfassungssystem nach einem der Ansprüche 1 bis 8 umfasst und ferner umfasst:
einen Hauptprozessor (512), um die Anzeige von Information auf dem Anzeigeschirm (32) zu steuern;
eine Batterie (508), um eine Stromversorgung für den Hauptprozessor, die Berührungserfassungsschaltungsmodule und die Steuerungseinrichtung bereitzustellen; und
einen steuerbaren Stromversorgungsschalter (510), der zwischen die Batterie (508) und den Hauptprozessor (512) gekoppelt ist, um die Stromversorgung für den Hauptprozessor ein- und auszuschalten, wobei der steuerbare Stromversorgungsschalter eine zur Steuerung durch die Steuerungseinrichtung gekoppelte Steuerleitung hat, und worin die Steuerungseinrichtung dafür konfiguriert ist, eine Benutzer-Weckgeste auf dem elektronischen Anzeigeschirm (32) zu ermitteln und als Antwort auf die Ermittlung die Stromversorgung für den Hauptprozessor einzuschalten.

11. Elektronische Dokumentlesevorrichtung nach Anspruch 10, worin die Berührungserfassungsschaltungsmodule in einem Zustand des verringerten Stromverbrauchs gehalten werden, wenn der steuerbare Schalter (510) aus ist, und worin die Steuerungseinrichtung dafür konfiguriert ist, die Berührungserfassungsschaltungsmodule (502a-d) periodisch abzufragen, um die Benutzer-Weckgeste zu ermitteln.

12. Verfahren zum Erfassen einer Benutzerberührung eines elektronischen Anzeigeschirms (32) mit vier Seiten, die ein erstes Paar von gegenüberliegenden Seiten und ein zweites Paar von gegenüberliegenden Seiten, die zu den ersten orthogonal sind, umfassen, und mit einer Vielzahl von im Wesentlichen transparenten Zeilen- (600) und Spalten-(610-)Elektrodenleitungen vor Information, die durch den Anzeigeschirm angezeigt wird, wobei das Verfahren umfasst und **gekennzeichnet ist durch**:
Unterteilen jeder Elektrodenleitung in zwei Abschnitte (600a,b; 610a,b), wobei einer im Wesentlichen alle Elektrodenleitungen auf jeder besagten Seite mit einem einzigen Berührungserfassungsschaltungsmodul (502a-d) verbindet;
Verwenden einer **durch** die Module (502) auf einem besagten Paar von gegenüberliegenden Seiten erfassten Berührung, um zu bestimmen, welches der mit dem orthogonalen Paar von gegenüberliegenden Seiten verbundenen Module zum Ermitteln einer Position entlang einer zu dem orthogonalen Paar von gegenüberliegenden Seiten parallelen Richtung zu verwenden ist; und
Verwenden eines besagten bestimmten Moduls auf jeder der zwei orthogonalen Seiten des Anzeigeschirms, um eine X-Y-Position der **durch** die bestimmten Module erfassten Berührung des Anzeigeschirms (32) zu bestimmen.

13. Verfahren nach Anspruch 12, ferner umfassend: Verwenden eines besagten Moduls, das im Wesentlichen alle der Elektrodenleitungen (600, 610) auf einer besagten Seite des Anzeigeschirms (32) verbindet, um zwischen durch die Elektrodenleitungen erfassten Berührungen zu interpolieren, um die X-Y-Position zu bestimmen.

14. Träger, der Prozessorsteuerungscode zum Implementieren des Verfahrens nach Anspruch 12 oder 13 trägt, worin der Prozessorsteuerungscode dafür konfiguriert ist, durch die Module (502) auf einem besagten Paar gegenüberliegender Seiten erfasste Berührungen zu verwenden, um zu bestimmen, welches der mit dem orthogonalen Paar von gegenüberliegenden Seiten verbundenen Module zum Ermitteln einer Position entlang einer zu dem orthogonalen Paar von gegenüberliegenden Seiten parallelen Richtung zu verwenden ist; und um das bestimmte Modul auf jeder der zwei orthogonalen Seiten des Anzeigeschirms (32) zu verwenden, um eine X-Y-Position der durch die bestimmten Module erfassten Berührung des Anzeigeschirms zu bestimmen.

## Revendications

1. Système de détection d'écran tactile à capacitance projetée, le système comprenant:
un écran d'affichage électronique (32), ledit écran d'affichage incorporant une pluralité d'électrodes de rangée (600) et de colonne (610) sensiblement transparentes pour réaliser une détection de contact de capacitance projetée ; et
une pluralité de modules de circuit de détection de contact (502a-d) couplés aux dites électrodes de rangée (600) et de colonne (610) pour détecter un contact avec ledit écran d'affichage (32), dans lequel chaque dit module de circuit de détection de contact comporte une pluralité de connexions de capteur pour une connexion à une pluralité desdites électrodes et une sortie de données de détection de contact, et dans lequel chaque dit module de circuit de détection de contact est configuré pour effectuer une interpolation entre les contacts détectés d'une pluralité desdites électrodes (600, 610) adjacentes simultanément et pour délivrer des données de détection de contact interpolé correspondantes avec une résolution plus grande que celle d'un espacement entre lesdites électrodes ; et
une sortie de données de système de détection pour fournir des données de détection de contact interpolé de rangée et de colonne ;
**caractérisé en ce que** chacune desdites électrodes de rangée (600) et chacune desdites électrodes de colonne (610) a une séparation pour diviser l'électrode en des première (600a, 610a) et deuxième (600b, 610b) parties, l'une desdites première et deuxième parties comportant une première connexion électrique d'un côté de l'écran d'affichage, l'autre desdites première et deuxième parties comportant une deuxième connexion électrique d'un côté opposé de l'écran d'affichage ;
dans lequel un premier desdits modules de circuit de détection de contact (502a) comporte ladite pluralité de connexions de capteur connectées aux dites premières connexions électriques desdites électrodes de rangée (600a), dans lequel un deuxième desdits modules de circuit de détection de contact (502c) comporte ladite pluralité de connexions de capteur connectées aux dites deuxièmes connexions électriques desdites électrodes de rangée (600b), dans lequel un troisième desdits modules de circuit de détection de contact (502b) comporte ladite pluralité de connexions de capteur couplées aux dites premières connexions électriques desdites électrodes de colonne (610a), et dans lequel un quatrième desdits modules de circuit de détection de contact (502d) comporte ladite pluralité de connexions de capteur couplées aux dites deuxièmes connexions électriques desdites électrodes de colonne (610b) ; et
dans lequel le système de détection comprend en outre un contrôleur (504) couplé aux dites sorties de données de détection de contact desdits premier, deuxième, troisième et quatrième modules de circuit de détection de contact (502a-d), et dans lequel ledit contrôleur (504) est configuré pour sélectionner lesdites données de détection de contact interpolé provenant de l'un desdits premier et deuxième modules de circuit de détection de contact (502a, c) pour fournir lesdites données de détection de contact interpolé de rangée à partir de ladite sortie de données de système de détection, dans lequel ladite sélection desdits premier et deuxième modules de circuit de détection de contact réagit aux dites données de détection de contact interpolé provenant desdits troisième et quatrième modules de circuit de détection de contact (502b, d), et dans lequel ledit contrôleur est configuré pour sélectionner lesdites données de détection de contact interpolé provenant de l'un desdits troisième et quatrième modules de circuit de détection de contact (502b, d) pour fournir lesdites données de détection de contact interpolé de colonne à partir de ladite sortie de données de système de détection, dans lequel ladite sélection desdites données de détection de contact interpolé provenant de l'un desdits troisième et quatrième modules de circuit de détection de contact réagit aux dites données de détection de contact interpolé provenant desdits premier et deuxième modules de circuit de détection de contact (502a, c).

2. Système de détection d'écran tactile à capacitance projetée selon la revendication 1, dans lequel, pour chaque côté de quatre côtés latéraux dudit écran d'affichage (32), sensiblement toutes lesdites connexions électriques d'électrode (600, 610) du côté de l'écran d'affichage sont connectées à un seul dit module de circuit de détection de contact (502a-d).

3. Système de détection d'écran tactile à capacitance projetée selon la revendication 1 ou 2, dans lequel ledit contrôleur (504) est configuré pour utiliser ladite sortie de données de détection de contact provenant desdits premier (502a) et deuxième (502c) modules de circuit de détection de contact connectés aux dites connexions électriques desdites électrodes de rangée (600) pour identifier si ledit contact est plus près desdites premières (610a) ou desdites deuxièmes (610b) connexions électriques desdites électrodes de colonne (610) et, respectivement, pour sélectionner ladite sortie de données de détection de contact dudit troisième (502b) ou dudit quatrième (502d) module de circuit de détection de contact, et dans lequel ledit contrôleur est configuré pour utiliser ladite sortie de données de détection de contact provenant desdits troisième (502b) et quatrième (502d) modules de circuit de détection de contact connectés aux dites connexions d'électrode desdites électrodes de colonne (610) pour identifier si ledit contact est plus près desdites premières (600a) ou desdites deuxièmes (600b) connexions électriques desdites électrodes de rangée (600) et, respectivement, pour sélectionner ladite sortie de données de détection de contact dudit premier (502a) ou dudit deuxième (502c) module de circuit de détection de contact.

4. Système de détection d'écran tactile à capacitance projetée selon l'une quelconque des revendications précédentes, dans lequel lesdites séparations dans lesdites électrodes de rangée (600) et de colonne (610) sont sensiblement à mi-chemin le long desdites électrodes de rangée et de colonne de sorte que lesdites première (600a, 610a) et deuxième (600b, 610b) parties comprennent des première et deuxième moitiés d'une ligne d'électrode.

5. Système de détection d'écran tactile à capacitance projetée selon l'une quelconque des revendications précédentes, dans lequel chaque dit module de circuit de détection de contact (502a-d) comprend un circuit intégré de détection de contact, et dans lequel chaque dit circuit intégré de détection de contact est situé physiquement adjacent à un dit côté dudit écran d'affichage portant des connexions électriques pour les parties d'électrode auxquelles il est connecté.

6. Système de détection d'écran tactile à capacitance projetée selon l'une quelconque des revendications précédentes, dans lequel ladite sortie de données de chacun desdits modules de circuit de détection de contact est couplée au dit contrôleur (504) par l'intermédiaire d'un bus de communication, et dans lequel ledit contrôleur a une sortie couplée à ladite sortie de données de système de détection et est configuré pour effectuer une réjection de contacts multiples et pour fournir lesdites données de détection de contact interpolé de rangée et de colonne.

7. Système de détection d'écran tactile à capacitance projetée selon l'une quelconque des revendications précédentes, dans lequel ledit contrôleur (504) est en outre configuré pour identifier l'un ou les deux d'objets géométriques et de gestes définissant un contact détecté dans lesdites données de détection de contact interpolé de rangée et de colonne pour délivrer l'une ou les deux de données d'objets et de gestes correspondantes.

8. Système de détection d'écran tactile à capacitance projetée selon la revendication 7, comprenant en outre un processeur supplémentaire ou principal (512) couplé à ladite sortie de données de système de détection pour recevoir lesdites données de détection de contact interpolé de rangée et de colonne et lesdites données d'objets ou de gestes et pour générer des données d'image correspondantes à partir desdites données de détection de contact interpolé de rangée et de colonne pour écrire sur ledit écran d'affichage (32) pour afficher une image en fonction dudit contact détecté.

9. Dispositif de lecture de document électronique comprenant le système de détection d'écran tactile à capacitance projetée selon l'une quelconque des revendications précédentes, dans lequel ledit écran d'affichage électronique (32) est un écran d'affichage électrophorétique tolérant la flexion comportant une zone d'affichage active avec une dimension en diagonale d'au moins 20 cm.

10. Dispositif de lecture de document électronique comprenant le système de détection d'écran tactile à capacitance projetée selon l'une quelconque des revendications 1 à 8, et comprenant en outre :
un processeur principal (512) pour commander l'affichage d'informations sur ledit écran d'affichage (32) ;
une batterie (508) pour fournir une puissance pour ledit processeur principal, lesdits modules de circuit de détection de contact et ledit contrôleur ; et
un commutateur de puissance pouvant être commandé (510) couplé entre ladite batterie (508) et ledit processeur principal (512) pour activer et désactiver la puissance vers ledit processeur principal, ledit commutateur de puissance pouvant être commandé comportant une ligne de commande couplée pour une commande par ledit contrôleur, et dans lequel ledit contrôleur est configuré pour détecter un geste de réveil d'utilisateur sur ledit écran d'affichage électronique (32) et pour activer la puissance vers ledit processeur principal en réponse à ladite détection.

11. Dispositif de lecture de document électronique selon la revendication 10, dans lequel lesdits modules de circuit de détection de contact sont maintenus dans un état de consommation d'énergie réduite lorsque ledit commutateur pouvant être commandé (510) est désactivé et, dans lequel ledit contrôleur est configuré pour scruter lesdits modules de circuit de détection de contact (502a-d) périodiquement pour détecter ledit geste de réveil d'utilisateur.

12. Procédé de détection d'un contact d'utilisateur sur un écran d'affichage électronique (32) comportant quatre côtés comprenant une première paire de côtés opposés et une deuxième paire de côtés opposés orthogonale à la première, et comportant une pluralité de lignes d'électrode de rangée (600) et de colonne (610) sensiblement transparentes à l'avant des informations affichées par ledit écran d'affichage, le procédé comprenant et étant **caractérisé par** :
la division de chaque dite ligne d'électrode en deux parties (600a, b ; 610a, b), l'une connectant sensiblement toutes les lignes d'électrode de chaque dit côté à un module de circuit de détection de contact unique (502a-d) ;
l'utilisation d'un contact détecté par les modules (502) sur une dite paire de côtés opposés pour déterminer quel module connecté à la paire orthogonale de côtés opposés doit être utilisé pour détecter une position le long d'une direction parallèle à ladite paire orthogonale de côtés opposés ; et
l'utilisation d'un dit module déterminé de chacun des deux côtés orthogonaux dudit écran d'affichage pour déterminer une position X-Y d'un contact avec ledit écran d'affichage (32) détecté par lesdits modules déterminés.

13. Procédé selon la revendication 12, comprenant en outre l'utilisation d'un dit module connectant sensiblement toutes les lignes d'électrode (600, 610) d'un dit côté de l'écran d'affichage (32) pour effectuer une interpolation entre des contacts détectés par lesdites lignes d'électrode pour déterminer ladite position X-Y.

14. Support supportant un code de commande de processeur pour mettre en oeuvre le procédé selon la revendication 12 ou 13, dans lequel ledit code de commande de processeur est configuré pour utiliser un contact détecté par les modules (502) sur une dite paire de côtés opposés pour déterminer quel module connecté à la paire orthogonale de côtés opposés doit être utilisé pour détecter la position le long d'une direction parallèle à ladite paire orthogonale de côtés opposés ; et pour utiliser ledit module déterminé de chacun de deux côtés orthogonaux dudit écran d'affichage (32) pour déterminer une position X-Y d'un contact dudit écran d'affichage détecté par lesdits modules déterminés.
